# EUROPEAN PATENT SPECIFICATION

(11) **EP 4 248 016 B1**
(45) Date of publication and mention of the grant of the patent: **13.08.2025**
(21) Application number: 21794409.9
(22) Date of filing: 18.10.2021
(51) Int. Cl.: E02B 3/06

(54) **DAM WITH CONVEX FRONT**
DAMM MIT KONVEXER VORDERSEITE
BARRAGE À FACE CONVEXE

(30) Priority: 18.11.2020 IT 202000027630
(43) Date of publication of application: 27.09.2023
(73) Proprietor: Zanovello, Roberto, 16154 Genova (IT); Macchioni, Giuseppe, 16141 Genova (IT)
(72) Inventor: IMERI, Tomor, 15121 Alessandria (IT)
(74) Representative: Garavelli, Paolo
(86) International application number: PCT/IT2021/050334
(87) International publication number: WO 2022/107177

(56) References cited:
- JP-A- H08 226 112
- US-A1- 2020 123 724

## Description

The present invention refers to a dam with a convex front.

Current existing dam technologies exploit sea currents at the seabed, where the transmission of energy is extremely low and, at surface level, the rise and fall of the wave and tide, obtaining very low yields due to the discontinuity of the wave motion.

Documents US-A1-2020/123724 and JP-A-H08 226112 describe prior art dams.

Object of the present invention is solving the aforementioned prior art problems, by providing a dam with a convex front that allows capturing all energy of the incident water mass, transforming it into a continuous flow, in any sea condition. This dam thus makes it possible to exploit the energy of the sea motion to the maximum degree, which is concentrated in a "dynamic layer" that originates at the level of the sea surface and is located up to about 8 meters deep, in fact being exhausted at below this quota.

The "convex front" of the dam of the present invention allows a higher use of the potential and kinetic energy of the waves, for its subsequent transformation into electrical energy.

The above and other objects and advantages of the invention, as will emerge from the following description, are achieved with a dam with a convex front such as that described in claim 1. Preferred embodiments and non-trivial variants of the present invention form the subject matter of the dependent claims.

It is understood that all attached claims form an integral part of the present description.

The present invention will be better described by some preferred embodiments, provided by way of non-limiting example, with reference to the attached drawings, in which:
Figure 1 is a schematic view of a basic module of a preferred, but not limiting, embodiment of the dam according to the present invention;
Figure 2 is a schematic view similar to Figure 1 with an indication of the directions of the wave motions;
Figure 3 is a side schematic view of the dam of Figure 1; and
Figure 4 is a schematic view of the dam of Figure 1 in its entirety.

With reference to the Figures, a preferred embodiment of the present invention is illustrated and described. It will be immediately obvious that innumerable variations and modifications (for example relating to shape, dimensions, various colors and parts with equivalent functionality) can be made to what is described, without departing from the scope of the invention as appears from the attached claims.

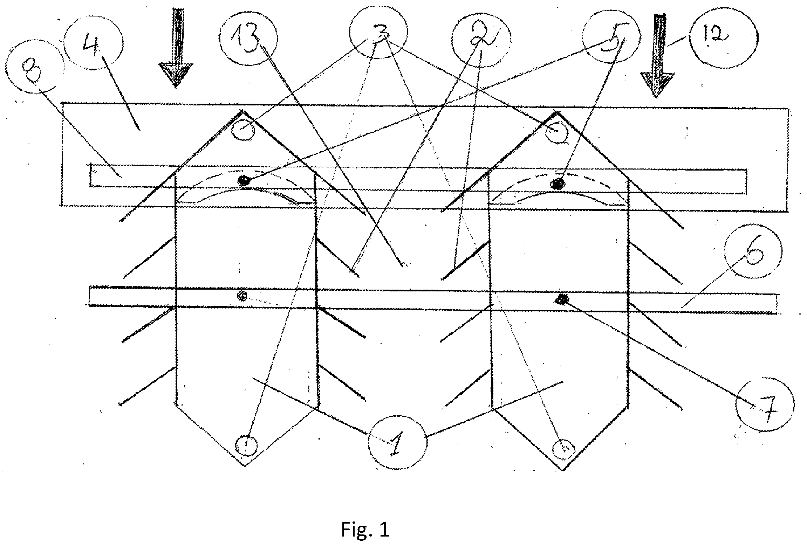

The convex front dam system of the present invention is based on a front of at least two caissons 1, parallel and interconnected to each other, preferably rhomboidal in shape, possibly joined to the beams 6, 8 of the dam, connected by rotation rests 5 as in Fig. 1, capable of allowing rotations to possibly orientate the caissons 1 orthogonally to the incident wave front.

The caissons 1 are joined together in the central part by the beam 6, integrally self-adjusting the orientation of both caissons 1 along the direction of the wave.

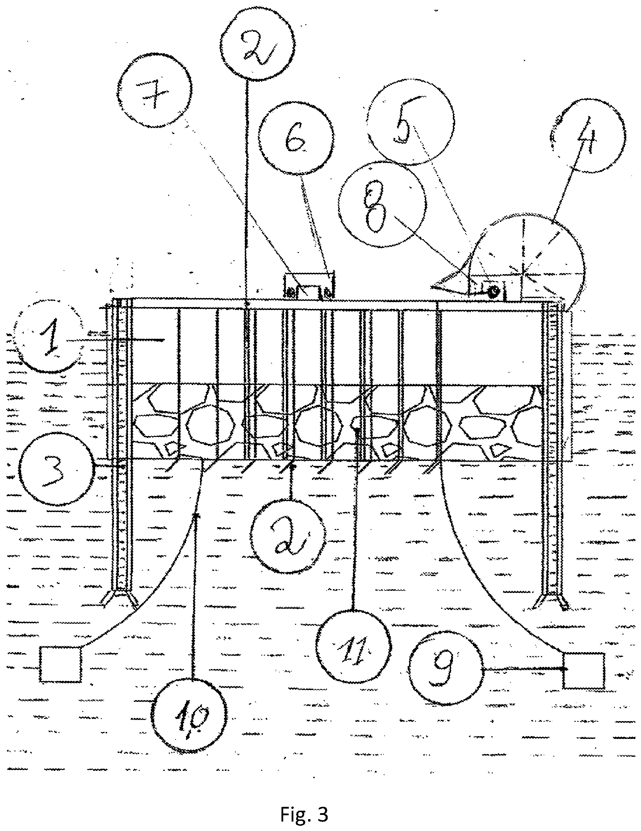

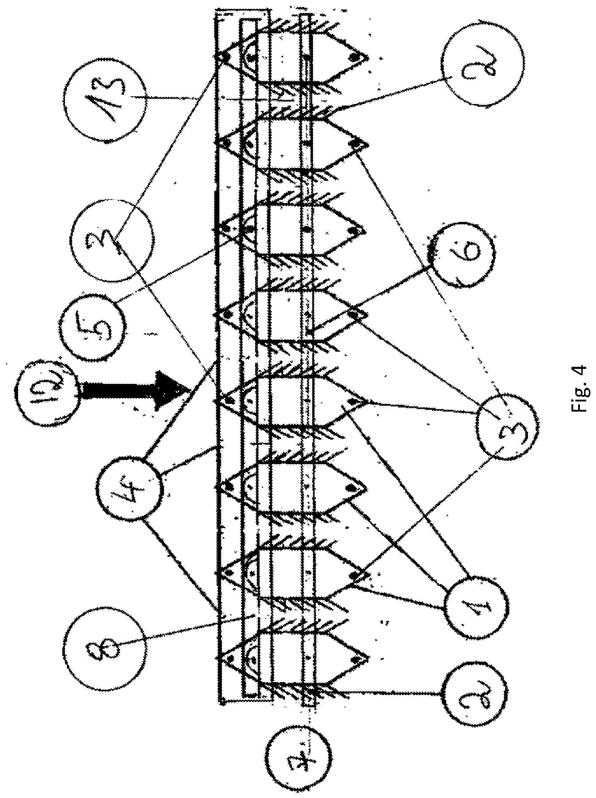

A base module consisting of at least two caissons 1 (as shown in Figure 1) supports a beam 8 on which the convex front 4 hinged on a roller rest 5 rests (see Figure 3). The final dimensions of the dam and the platform can be obtained as the sum of several modules side by side in series or in parallel (see Figure 4).

At the terminal interstices 13 of each module, any hydraulic turbine (not shown) can be positioned, thanks to a suitable product, with opening on the sea side to obtain, through the Venturi effect, the maximum potential of electrical energy.

The sides of each caisson 1 are equipped with special vertical fins 2 arranged in a herringbone pattern, which transform the wave, broken by the bow of the caissons 1 and conveyed by the convex front 4, in counter-pressure with respect to the incident sea wave, counter-pressure that contrasts the thrust of the wave itself, contributing, together with the fins positioned on the keel, to the horizontal stability of the dam and to the suction effect of the mass of water entering the penstock represented by the interstices 13, thanks to the depression created by the expansion phase obtained at the exit of the flow from the interstices 13 and from the inverted funnel opening, created by the sterns of two contiguous caissons.

Any other fins 2, herringbone and of suitable size and shape, can be positioned along the keel of the caissons 1, in order to help counteract the possible deep effect of the waves, generating counter-stabilizing forces of the dam horizontally and vertically.

The Torricelli columns 3 (better illustrated in Figure 3) contribute to the vertical stability of the structure, reducing the stress discharged on the anchors to the desired extent; they also help to counterbalance the Archimedes principle, reducing the quantities of ballast 11 necessary to sink the structure to the desired levels.

The basic module, which implements the basic principle of the invention, consists of two caissons 1, preferably rhomboidal, with the bow that breaks the incoming wave and the shape of the side that, in competition with the shape of the bow of the adjacent caisson 1, accelerates the speed of the incident wave due to the Venturi effect.

The caissons 1 are laterally equipped with a series of vertical herringbone fins 2, of suitable shape, size, profile and angle, aimed at creating stabilizing forces on the structure (salmon effect) .

The caisson unit 1 may have one or more pins in the upper part, around which both the connecting beam 6 between the caissons and the support beam 8 of the convex front of the dam can rotate.

Each caisson 1, represented in section in Figure 3, consisting of concrete and/or steel structures, has, in the lower part, the anchors, consisting of the bases 9 suitably fixed to the seabed and by connecting chains 10 fixed to the caisson itself, as shown in Figure 3.

As seen, the bottom (keel) of the caisson 1 can be equipped with fins 2 positioned in a herringbone pattern of suitable size, shape and profile, suitable for generating a force contrasting that of the incident wave and stabilizing the caissons 1 vertically.

The inside of the caisson 1 is ballasted with the element 11 to obtain the desired level of the waterline of the dam or platform.

The empty spaces inside the box 1 can be used for storage of various kinds and services.

The upper part of the caisson 1 can be connected with adjacent caissons 1 by beams 6, each including one or more central pins 7 for the possible rotation of the caisson 1, aimed at dynamic positioning as orthogonal as possible to the incident wave.

On the upper part of each caisson 1 the convex front 4 is positioned on the beam 8.

The caissons 1 incorporate several Torricelli columns 3 of appropriate section, positioned in an opportune way, to exploit the stabilization principle created by the pressure in the columns and reduce the weight of the ballasts 11 and the stress on the anchor chains 10, attributing part of the load to the pressure itself.

Each component of the system can be made with elements and materials suitable for the purpose for which it is intended.

The basic operating principle of the system of the present invention, with all its components, consists in the creation of forces that oppose those of the waves that strike the dams or floating platforms, exploiting scientific principles of fluid dynamics (Torricelli, Venturi and Bernoulli - Coanda, Schrauberger effects), which allow the free energy of wave motion and atmospheric pressure to be used in the generation of stabilizing counter forces.

The practical implementation of the above basic principle is obtained with the construction of a front, or bridge, of boats (Figure 4) consisting of caissons 1, equipped with fins 2 (with a "salmon" effect) supporting convex breakwater dams, platforms innovative floats and with the creation of Torricelli columns 3, which stiffen and stabilize the entire floating structure.

The force of the waves incident horizontally on the dams or on the floating platforms is contrasted by the shape of the fins 2 fixed vertically on the sides and on the keel of the caissons 1 which, due to the Bernoulli - Coanda effect, create an antagonistic force with respect to that of the incident wave.

The force of the waves incident vertically (upward and downward movements) and the thrusts generating overturning moments on the floating structures (dams or platforms) are counteracted by the Torricelli columns 3 as the liquid in depression completely fills the column (sealed at the top) and acts as a solid integral part of the marine fluid layer underlying the submerged end of the column, while the pressure exerted by the columns 3 on the structure through the caissons 1 reduces the need for ballast to an equivalent extent.

The Bernoulli - Coanda effect, contrasting the horizontal forces of the incident wave and the effect of the Torricelli columns, contrasting the vertical forces and the overturning moments of the waves, significantly reduce the stresses that the chains 10 and the anchors 9 must amortize.

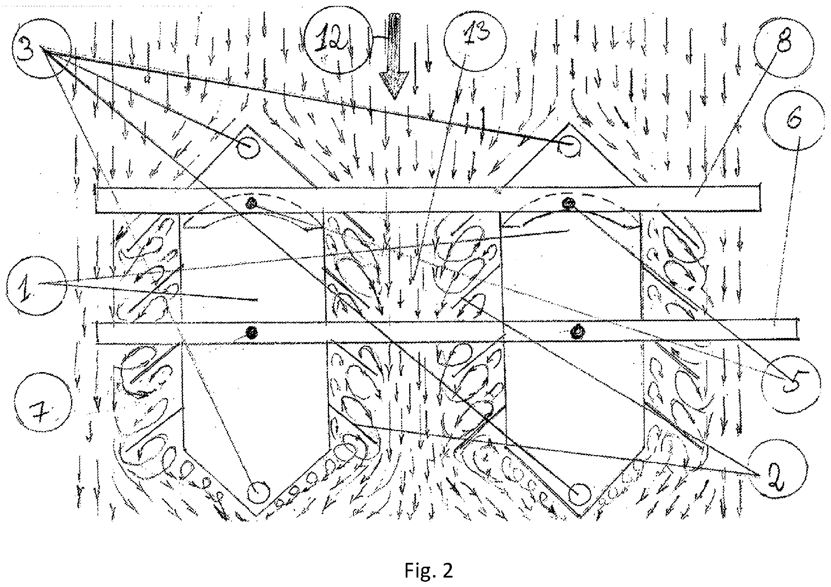

With reference to Fig. 2, which highlights the basic operating principle of the invention, it can be seen how the incident wave, inserting itself between the prows of two adjacent caissons 1, transforms its pressure, due to the Venturi effect, into velocity which, hitting the fins 2 positioned on the sides of the caissons 1, accelerates in the part exposed to the wave and creates a depression in the internal part (Bernoulli - Coanda effect), thereby generating a contrasting force of the same magnitude as that which strikes the fin 2.

The overall stabilizing effects reduce the stresses exerted on the chains and anchors in the supplementary stabilization interventions.

The incident wave front causes all the caissons 1 to rotate integrally (thanks to the pins 7 and the lunettes 5) to meet the incident wave front as orthogonally as possible.

The wave strikes the structure of Figure 4 and the wave pressure is transformed into sliding speed along the interstices 13 created by the walls of the caissons 1 and the convex front 4, with the caissons 1 positioned in a direction orthogonally opposite to the wavy motion.

Figure 3 shows (in section) the Torricelli columns 3, integral with the caissons 1, which stabilize the floating structure with respect to vertical and torsional stresses.

In Figure 3, the fins 2 placed under the keel of the caissons 1 are also better highlighted, with the function of generating forces contrasting the vertical and horizontal thrusts of the wave motion.

The bow and stern of the caissons are connected to the anchoring bases 9 by anchoring chains 10, suitably positioned in order to minimize the traction forces and the overturning moments acting on the floating structure.

The uniqueness of the dam system of the present invention, as described above, thus lies in the idea of exploiting the energy of sea motion to the maximum degree, which is concentrated in a "dynamic layer" that originates at the level of the sea surface and is placed up to about 8 meters deep, in fact running out below this altitude.

The convex front of the dam is an inventive arrangement that allows the highest use of the potential and kinetic energy of the waves, for its subsequent transformation into electrical energy.

The front of rhomboidal caissons 1 is a solution that, on the one hand, allows to create an acceleration of the mass of incoming water, with the maximum efficiency of the transformation for energy purposes and, at the same time, thanks to the expansion phase at the outlet, allows reducing speed and wave height, contributing to the protection of port environments and coastal areas, which are currently at risk.

## Claims

1. Dam system comprising the following interconnected components:
- at least two floating caissons (1), preferably having a rhomboidal section, weighted with a ballast (11) to maintain the desired buoyancy level, each of said caissons (1) being equipped with vertical herringbone fins (2) placed along its sides to maintain horizontal stability and fins (2) placed at the base or keel of each caisson (1), to contribute to vertical and horizontal stability;
- a central beam (6) for connecting the caissons (1);
- a beam (8) supporting a convex front (4), namely a front (4) with round section, which helps to convey the incident wave in the interstices (13) between the caissons (1), the convex front (4) allowing the use of the potential and kinetic energy of the waves, for its subsequent transformation into electricity; and
- a plurality of Torricelli columns (3), namely columns (3) which operate according to the Torricelli's Law stating that the faster a fluid flows out of an opening in a container, the higher the fluid level above the opening is, the columns (3) positioned integral with the caissons (1), to exploit the stabilization principle created by the pressure in the columns (3) and reduce the weight of the ballasts (11), attributing part of the load to the pressure itself with a task of contrasting an Archimedes thrust generated by the body of the immersed system.

2. Dam system according to claim 1, **characterized in that**, to minimize the cost of applying the Torricelli principle, one foot of each Torricelli column (3) is suitably widened and sealed, according to calculations that guarantee equivalence of the Archimedes thrust with the counterthrust of the Torricelli principle.

3. Dam system according to claim 1 or 2, **characterized in that** it also comprises anchoring bases (9), with respective chains (10), which serve to further guarantee the stability of the floating structure of the system, said convex front (4) being designed to minimize the stress on the anchor (9) and on the chains (10).

4. Dam system according to any one of the preceding claims, **characterized in that** said convex front (4) is supported by said beam (8) hinged on a roller steady rest (5).

5. Dam system according to any one of the preceding claims, **characterized in that** it further comprises at least one pin (7) positioned on the upper part of the caissons (1), so that the caissons (1) can rotate as much as possible orthogonally with respect to the incident wave-front.

6. Dam system according to any one of the preceding claims, **characterized in that** it is suitable for the construction of floating platforms or terminals.

## Patentansprüche

1. Dammsystem bestehend aus folgenden miteinander verbundenen Komponenten:
- mindestens zwei schwimmende Senkkästen (1), vorzugsweise mit rhomboidem Querschnitt, die mit Ballast (11) beschwert sind, um den gewünschten Auftrieb aufrechtzuerhalten, wobei jeder der Senkkästen (1) mit vertikalen Flossen (2) in einem Fischgrätenmuster ausgestattet ist, die entlang seiner Seiten angebracht sind, um die horizontale Stabilität aufrechtzuerhalten, und an der Basis oder dem Kiel jedes Senkkastens (1) Flossen (2) angebracht sind, um zur vertikalen und horizontalen Stabilität beizutragen;
- einen Mittelträger (6), der die Kästen (1) verbindet;
- einen Balken (8), der eine konvexe Front (4) trägt, d. h. eine Front mit rundem Querschnitt, die dazu beiträgt, die einfallende Welle in die Räume (13) zwischen den Kästen (1) zu leiten, wobei die "konvexe Front" die Nutzung der potenziellen und kinetischen Energie der Wellen für ihre anschließende Umwandlung in elektrische Energie ermöglicht; und
- eine Vielzahl von Torricelli-Säulen (3), d. h. Säulen (3), die nach dem Torricelli-Gesetz funktionieren, das besagt, dass der Flüssigkeitspegel über der Öffnung umso höher ist, je schneller eine Flüssigkeit aus einer Öffnung in einem Behälter fließt. Die Säulen (3) sind fest mit den Senkkästen (1) verbunden, um das durch den Druck in den Säulen (3) erzeugte Stabilisierungsprinzip auszunutzen und das Gewicht des Ballasts (11) zu verringern, indem ein Teil der Last auf den Druck selbst zurückgeführt wird, wobei die Aufgabe darin besteht, dem archimedischen Schub entgegenzuwirken, der durch den Körper des eingetauchten Systems erzeugt wird.

2. Dammsystem nach Anspruch 1, **dadurch gekennzeichnet, dass** zur Minimierung der Kosten für die Anwendung des Torricelli-Prinzips ein Fuß jeder Torricelli-Säule (3) entsprechend verbreitert und abgedichtet ist, und zwar gemäß Berechnungen, die die Gleichwertigkeit des archimedischen Schubs mit dem Gegenschub des Torricelli-Prinzips gewährleisten.

3. Dammsystem nach Anspruch 1 oder 2, **dadurch gekennzeichnet, dass** es außerdem Ankerbasen (9) mit entsprechenden Ketten (10) umfasst, die dazu dienen, die Stabilität der schwimmenden Struktur des Systems weiter zu gewährleisten, wobei die konvexe Vorderseite (4) so gestaltet ist, dass die Belastung der Anker (9) und der Ketten (10) minimiert wird.

4. Dammsystem nach einem der vorhergehenden Ansprüche, **dadurch gekennzeichnet, dass** die konvexe Vorderseite (4) durch den Balken (8) gestützt wird, der an einer Rollenstütze (5) angelenkt ist.

5. Dammsystem nach einem der vorhergehenden Ansprüche, **dadurch gekennzeichnet, dass** es außerdem mindestens einen Stift (7) umfasst, der am oberen Teil der Senkkästen (1) positioniert ist, so dass sich die Senkkästen (1) möglichst orthogonal zur einfallenden Wellenfront drehen können.

6. Dammsystem nach einem der vorhergehenden Ansprüche, **dadurch gekennzeichnet, dass** es für den Bau schwimmender Plattformen oder Terminals geeignet ist.

## Revendications

1. Système de barrage comprenant les éléments interconnectés suivants:
- au moins deux caissons flottants (1), de préférence de section rhomboïdale, lestés de lest (11) pour maintenir le niveau de flottabilité souhaité, chacun desdits caissons (1) étant équipé d'ailettes verticales (2) en chevrons placées le long de ses côtés pour maintenir la stabilité horizontale et d'ailettes (2) placées à la base ou à la quille de chaque caisson (1), pour contribuer à la stabilité verticale et horizontale;
- une poutre centrale (6) reliant les caissons (1);
- une poutre (8) supportant un front convexe (4), c'est-à-dire un front à section ronde, qui contribue à véhiculer l'onde incidente dans les espaces (13) entre les caissons (1), le « front convexe » permettant d'utiliser l'énergie potentielle et cinétique des ondes, pour sa transformation ultérieure en énergie électrique; et
- une pluralité de colonnes Torricelli (3), c'est-à-dire des colonnes (3) fonctionnant selon la loi de Torricelli qui stipule que plus un fluide s'écoule rapidement d'une ouverture dans un récipient, plus le niveau de fluide au-dessus de l'ouverture est élevé, les colonnes (3) positionnées solidaires des caissons (1), pour exploiter le principe de stabilisation créé par la pression dans les colonnes (3) et réduire le poids du ballast (11), en attribuant une partie de la charge à la pression elle-même avec pour tâche de contraster la poussée d'Archimède générée par le corps du système immergé.

2. Système de barrage selon la revendication 1, **caractérisé en ce que**, pour minimiser le coût d'application du principe de Torricelli, un pied de chaque colonne Torricelli (3) est convenablement élargi et scellé, selon des calculs qui garantissent l'équivalence de la poussée d'Archimède avec la contre-poussée du principe de Torricelli.

3. Système de barrage selon la revendication 1 ou 2, **caractérisé en ce qu'**il comprend en outre des bases d'ancrage (9), avec des chaînes respectives (10), qui servent à assurer davantage la stabilité de la structure flottante du système, ladite face convexe (4) étant conçue pour minimiser la contrainte sur l'ancre (9) et sur les chaînes (10).

4. Système de barrage selon l'une quelconque des revendications précédentes, **caractérisé en ce que** ladite façade convexe (4) est supportée par ladite poutre (8) articulée sur un support à rouleaux (5).

5. Système de barrage selon l'une quelconque des revendications précédentes, **caractérisé en ce qu'**il comprend en outre au moins un axe (7) positionné sur la partie supérieure des caissons (1), de sorte que les caissons (1) peuvent tourner le plus orthogonalement possible par rapport au front d'onde incident.

6. Système de barrage selon l'une quelconque des revendications précédentes, **caractérisé en ce qu'**il est adapté à la construction de plates-formes ou de terminaux flottants.
